# EUROPEAN PATENT SPECIFICATION

(11) **EP 3 641 421 B1**
(45) Date of publication and mention of the grant of the patent: **03.04.2024**
(21) Application number: 19203557.4
(22) Date of filing: 16.10.2019
(51) Int. Cl.: H04W 56/00, H04W 52/00, H04B 7/26

(54) **RADIO COMMUNICATION SYSTEM**
FUNKKOMMUNIKATIONSSYSTEM
SYSTÈME DE COMMUNICATION RADIO

(30) Priority: 17.10.2018 JP 2018196183
(43) Date of publication of application: 22.04.2020
(73) Proprietor: Panasonic Intellectual Property Management Co., Ltd., Osaka-shi, Osaka 540-6207 (JP)
(72) Inventor: SUGITANI, Toshiyuki, Osaka, 540-6207 (JP); HIRAI, Katsuhiro, Osaka, 540-6207 (JP)
(74) Representative: Eisenführ Speiser

(56) References cited:
- EP-A1- 2 602 945
- EP-A1- 3 024 288
- EP-A2- 1 313 240
- US-A1- 2014 300 472

## Description

### Technical Field

The present invention relates to a radio communication system for performing time-division multiplex communication.

### Background Art

US 2014/300472 A1 discloses a wireless communication device and a locator system. There is provided a locator system that facilitates registration of a calling apparatus to be added and a locator. A portable unit communicates with a base unit with a DECT protocol. Moreover, the portable unit serves as a calling apparatus that transmits a call signal to the locator to be attached to an item with a locator protocol. The portable unit transmits registration information to the base unit by wireless communication as being triggered by registration with the locator in one-to-one correspondence being ended. In a case where a request is received from the portable unit as a calling apparatus to be added, the base unit transmits stored registration information received from the portable unit to the portable unit. The portable unit stores the registration information received from the base unit.

In response to recent awareness of crime prevention, the number of home security cameras and sensors has increased and systems including door intercoms for storing such devices have become commercially practical. Moreover, a monitor system proposed as a door intercom function provides a notification about whether a terminal user is located near the master unit of the door intercom, that is, whether the user is at home or not. In such a system, a camera, a sensor, and a monitor terminal are connected to an intercom master unit via radio communication.

PTL 1 discloses the invention of a locator system as a radio communication system that is used for locating objects such as a key, a purse, a mobile device, and a pet.

In the locator system of PTL 1, a locator issues an alarm to notify a user of the position of the locator in response to a user call for the locator through a calling apparatus. The calling apparatus and the locator are connected to each other via radio communication based on a time division multiplex communication system in which a basic frame is divided into multiple slots and communication are performed for each of the slots.

In response to a user operation for searching for the locator by means of the calling apparatus, the calling apparatus switches one slot in the basic frame to reception, stands by for a response signal from the locator, and starts transmitting a calling signal from another slot, the calling signal including a slave-unit identification code. When receiving the response signal from the locator, the calling apparatus stops the calling signal, starts transmitting a synchronizing signal only from one slot, performs interactive communication with the locator, using an upstream slot and a downstream slot, and controls the locator to issue an alarm.

The locator receives signals from two consecutive slots at regular intervals and searches for the calling signal from the calling apparatus. When receiving the calling signal, the locator transmits the response signal at the timing of the standby slot of the calling apparatus. When receiving the synchronizing signal of the calling apparatus, the locator establishes a communication link with the calling apparatus, starts interactive communication using an upstream slot and a downstream slot, and starts issuing an alarm in response to an instruction to issue an alarm.

In a radio communication system for performing time-division multiplex communication for each slot divided from a basic frame as in the locator system of PTL 1, communication data is transmitted with fixed data referred to as a sync word and data is retrieved by a receiving end according to the sync word. For example, in a search for the calling signal by the locator in the locator system of PTL 1, the locator first operates to detect a string of received data that agrees with the sync word. When detecting a string of received data that agrees with the sync word, the locator retrieves a string of received data of the transmission field of the slave-unit identification code from subsequent data strings, compares the string with the slave-unit identification code of the locator, and determines whether the calling signal is addressed to the locator. When the received signal is not a calling signal addressed to the locator, the locator operates to restart a search. At the completion of a search after a predetermined time, the locator returns into hibernation. When the received signal is a calling signal addressed to the locator, the locator operates to synchronize to a registered calling apparatus.

### Citation List

### Patent Literature

PTL 1
Japanese Patent Application Laid-Open No. 2014-078908

### Summary of Invention

### Technical Problem

In the locator system, it is necessary to continuously transmit the calling signal of the locator over a longer time than a search period in the locator. Power consumption during a standby status of the locator considerably depends upon the search period of the calling signal. Thus, in order to reduce the power consumption of the locator, it is necessary to increase the search period and extend the transmission time of the calling signal.

In the case of a door intercom system accommodating a camera, a sensor, and a terminal device having a monitoring function, simultaneous communication with the devices are needed. In a period during which the calling signal is transmitted in the multiple slots, a radio resource usable for other communication is restricted, resulting in the need for minimizing the transmission time of the calling signal. Thus, in order to effectively use the radio resource in the system of the related art, the transmission time of the calling signal cannot be increased, thereby limiting a reduction in the power consumption of the devices that operate in response to the calling signal.

When a sync word transmitted from a device other than the registered calling apparatus is received in a search, the locator system of PTL 1 needs a retry of a search, thereby increasing power consumption.

The present invention has been devised to solve the problem of the related art. A main object of the present invention is to provide a radio communication system that can achieve effective usage of a radio resource and reduce power consumption in devices operating on batteries.

### Solution to Problem

A radio communication system of the present invention is defined in claim 1.

### Advantageous Effects of Invention

According to the present invention, the control station determines the sync word according to the predetermined method and transmits the control signal including the determined sync word, whereas the subsidiary station detects the sync word determined by the control station and establishes synchronization with the control station. Thus, even when the control signal transmitted by another control station is received in a search of the control station, the probability of detecting the sync word can be reduced, thereby reducing the occurrence of retries in the search and suppressing an increase in power consumption during the search.

Furthermore, according to the present invention, the control station may transmit the control signal including the sync word in one slot in the basic frame of time-division multiplex communication, so that other slots can be freely used. Therefore, in a system accommodating multiple devices, for example, a door intercom system accommodating a camera, a sensor, and a terminal device having a monitoring function, influence on a radio resource usable for other communication is reduced, resulting in a small restriction and the effective usage of the radio resource even when multiple functions are simultaneously operated.

### Brief Description of Drawings

FIG. 1 is a schematic drawing illustrating the outline of a radio communication system according to Embodiment 1 of the present invention;
FIG. 2 is a block diagram illustrating a configuration example of the intercom master unit and the entrance slave unit of the radio communication system according to Embodiment 1 of the present invention;
FIG. 3 is a block diagram illustrating a configuration example of a monitor terminal for the monitoring function of the radio communication system according to Embodiment 1 of the present invention;
FIG. 4 is a block diagram illustrating a configuration example of a camera for the supervisory function of the radio communication system according to Embodiment 1 of the present invention;
FIG. 5 illustrates a configuration example of a frame and slots in time-division multiplex communication according to Embodiment 1 of the present invention;
FIG. 6 illustrates a field configuration of a transmitted/received signal according to Embodiment 1 of the present invention;
FIG. 7 illustrates the configuration of an A field of the transmitted/received signal according to Embodiment 1 of the present invention;
FIGS. 8A and 8B illustrate the configuration of a B field of the transmitted/received signal according to Embodiment 1 of the present invention;
FIG. 9 illustrates data of the B field of a first control signal according to Embodiment 1 of the present invention;
FIG. 10 illustrates data of the B field of a second control signal according to Embodiment 1 of the present invention;
FIG. 11 illustrates an example of the transmission of the control signal in time-division multiplex communication according to Embodiment 1 of the present invention;
FIG. 12 illustrates a usage example of slots during camera data communication according to Embodiment 1 of the present invention; and
FIG. 13 illustrates a usage example of the slots in communication for presence confirmation during the camera data communication according to Embodiment 1 of the present invention.

### Description of Embodiments

A radio communication system according to a first aspect of the present invention for solving the abovementioned problem includes a control station and a subsidiary station that perform time-division multiplex communication, the control station including: a first radio section that performs radio communication with the subsidiary station and transmits a control signal to the subsidiary station; and a first control section that determines a sync word according to a predetermined method and controls the first radio section so as to transmit the control signal including the sync word, the subsidiary station including: a second radio section that performs radio communication with the control station and receives the control signal from the control station; and a second control section that detects the sync word from the control signal, establishes synchronization with the control station based on the sync word, and controls the second radio section so as to perform time-division multiplex communication with the control station.

With this configuration, the subsidiary station and the control station perform time-division multiplex communication by using a sync word determined for each control station of the radio communication system. Thus, even when another control station operates in a receivable area of the subsidiary station, the probability of an overlap between a sync word used by the control station and a sync word used by another control station can be reduced. This can suppress the occurrence of retries in a search when the retries are caused by erroneous detection of a sync word, thereby suppressing an increase in power consumption during the search. Furthermore, with this configuration, the control station may transmit the control signal including the sync word in one slot in the basic frame of time-division multiplex communication, so that other slots can be freely used. Therefore, in a system accommodating multiple devices, for example, a door intercom system accommodating a camera, a sensor, and a terminal device having a monitoring function, influence on a radio resource usable for other communication is reduced, resulting in a small restriction and effective usage of the radio resource even when multiple functions are simultaneously operated.

The first control section according to a second aspect of the invention for solving the abovementioned problem selects the sync word such that the same bit string as the sync word is excluded from bit strings other than the bit string transmitted as the sync word from among the bit strings of the control signal.

With this configuration, the same bit string as the sync word is excluded from a part other than the sync word in the control signal transmitted from the control station. Thus, even when a search is started during transmission of the control signal and the control signal is received halfway, sync-word detection can be prevented in a part other than the correct sync word. This can suppress the occurrence of retries in a search when the retries are caused by erroneous detection of a sync word, thereby suppressing an increase in power consumption during the search.

Further, the first control section according to the invention controls the first radio section to transmit a second control signal including a second sync word common to the control signal in the radio communication system and the second control section establishes, when the sync word is not detected from the control signal, synchronization with the control station by using the second sync word included in the second control signal.

With this configuration, the control station transmits the second control signal including the sync word common to the control signal including a sync word determined for each control station of the radio communication system in the radio communication system, and the subsidiary station can perform communication while establishing synchronization with the control station by using the second control signal when the sync word cannot be detected when, for example, the control signal cannot be received. Thus, even when it is difficult to receive the control signal due to radio frequency interference from other radio communication apparatuses, communication can be conducted between the subsidiary station and the control station, achieving higher reliability. When the second control signal is identical in configuration to a control signal used in an existing radio communication system, the radio communication system of the present invention can be easily constructed by the control station and the subsidiary station of the radio communication system of the present invention and an existing subsidiary station according to an existing synchronous system with an effectively used radio resource. Thus, the present invention is easily applied to a radio communication system that accommodates subsidiary stations for performing different operations like a camera, a sensor, and a monitor terminal.

The first control section according to a third aspect of the invention for solving the abovementioned problem determines the sync word based on the identification code of the control station.

With this configuration, the subsidiary station can also determine a sync word according to the identification code of the control station. This eliminates the need for control for a notification of the sync word from the control station, achieving simple control.

The subsidiary station according to a fourth aspect of the present invention for solving the abovementioned problem further includes: a first storage section that is formed of a nonvolatile memory and stores information necessary for communication with the control station; a second storage section that is formed of a volatile memory; a battery that supplies power; a timekeeping section that keeps a predetermined time; a third storage section that is formed of a volatile memory and stores the sync word determined by the control station and information necessary for communication with the control station; and a power supply control section that starts power supply to the first storage section, the second storage section, the second radio section, and the second control section when the battery is mounted or a timer of the timekeeping section has expired, and shuts off power supply to the first storage section, the second storage section, the second radio section, and the second control section in response to an instruction of the second control section, the second control section determines whether the battery has been mounted or the timer of the timekeeping section has expired, when power is supplied, when determining that the battery has been mounted, the second control section reads, from the first storage section, the information necessary for communication with the control station, writes the read information in the third storage section, sets a time until a notification of a presence confirmation signal in the timekeeping section, and instructs the power supply control section to shut off power supply, and when determining that the timer of the timekeeping section has expired, the second control section establishes synchronization with the control station by using the information that is necessary for communication with the control station and is stored in the third storage section and the sync word determined by the control station, provides a notification of the presence confirmation signal, sets a time until the notification of the presence confirmation signal in the timer section, and instructs the power supply control section to shut off the power supply.

With this configuration, power supply to the first storage section, the second storage section, the radio section, and the control section is shut off in the subsidiary station during standby, thereby reducing power consumption during standby. Moreover, the information necessary for communication is stored in the storage section including volatile memory to which power is supplied all the time. Thus, when communication are performed in synchronization with the control station, it is not necessary to read information from nonvolatile memory, thereby eliminating power consumption for reading information from nonvolatile memory. This can reduce power consumption during communication with the control station.

An embodiment of the present invention will be described below with reference to the accompanying drawings.

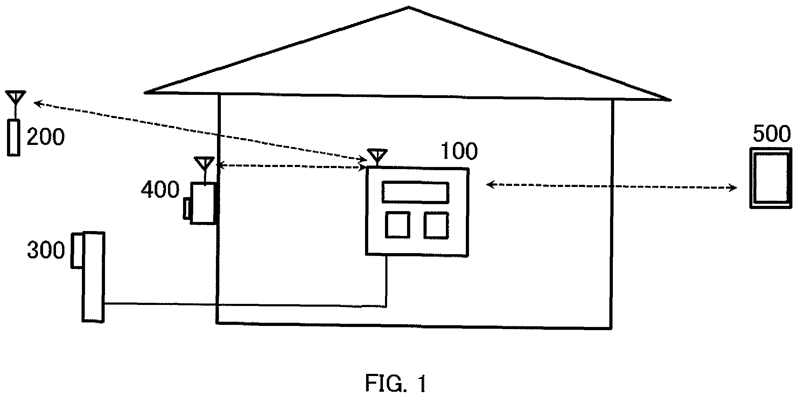

Referring to FIG. 1, the outline of the operations of a radio communication system according to Embodiment 1 will be first described below. FIG. 1 is a schematic drawing illustrating the outline of the radio communication system according to Embodiment 1.

As illustrated in FIG. 1, the radio communication system according to Embodiment 1 includes door-intercom master unit 100 that operates as a control station, monitor terminal 200 for a monitoring function, monitor terminal 200 operating as a subsidiary station, entrance slave unit 300 that is installed on an entrance post or the like and is wire connected to door-intercom master unit 100, camera 400 for a supervisory function, camera 400 performing radio communication with door-intercom master unit 100, and smartphone 500 that is connected to door-intercom master unit 100 on the Internet.

Referring to FIG. 1, the operations of the monitoring function, the door intercom function, and the supervisory function of the radio communication system will be described below.

The operations of the monitoring function will be first discussed below. The monitoring function enables monitor terminal 200 to detect whether monitor terminal 200 is within the communication radius of door-intercom master unit 100 and notify door-intercom master unit 100 of a change of state, and enables door-intercom master unit 100 to store the change of state and notify smartphone 500 of the change of state. Monitor terminal 200 periodically transmits a presence confirmation signal to door-intercom master unit 100. Door-intercom master unit 100 detects the presence of monitor terminal 200 within the communication radius of door-intercom master unit 100 by receiving the presence confirmation signal. When the presence confirmation signal is not received for a certain period of time, door-intercom master unit 100 detects that monitor terminal 200 has moved out of the communication radius of door-intercom master unit 100. When detecting that monitor terminal 200 has moved out of the communication radius of door-intercom master unit 100, door-intercom master unit 100 stores the time of detection and notifies smartphone 500 that monitor terminal 200 has moved out of the communication radius. When the reception of the presence confirmation signal from monitor terminal 200 is restarted, door-intercom master unit 100 detects that monitor terminal 200 has returned to the communication radius, stores the time of detection, and notifies smartphone 500 that monitor terminal 200 has returned into the communication radius. Door-intercom master unit 100 can always refer to, from smartphone 500, the time when monitor terminal 200 has moved out of the communication radius and the time when monitor terminal 200 has returned into the communication radius, the times being stored in door-intercom master unit 100. For example, by using the monitoring function, a parent with smartphone 500 can easily recognize that a child has come home from school via monitor terminal 200 attached to the school bag of the child.

The operations of the door intercom function will be described below. The door intercom function informs a user of the arrival of a guest through door-intercom master unit 100 when the button (not illustrated) of entrance slave unit 300 is pressed. When a response is sent back through door-intercom master unit 100, voice communication can be conducted between door-intercom master unit 100 and entrance slave unit 300.

The supervisory function will be described below. The supervisory function informs a user of a sensor reaction of camera 400 through door-intercom master unit 100 at the time of the reaction and enables door-intercom master unit 100 to display and store an image transmitted from camera 400.

The operations of the monitoring function, the door intercom function, and the supervisory function of the radio communication system were described with reference to FIG. 1.

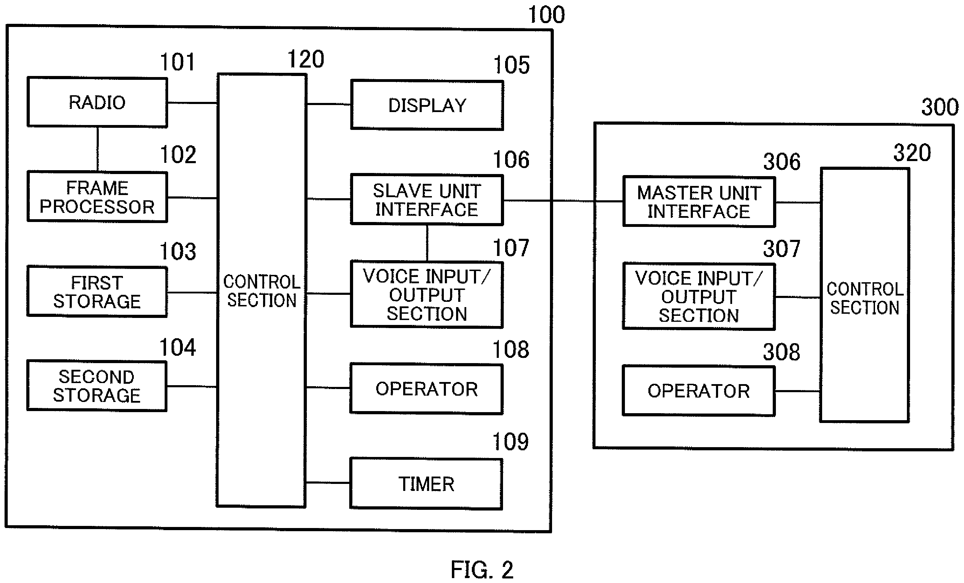

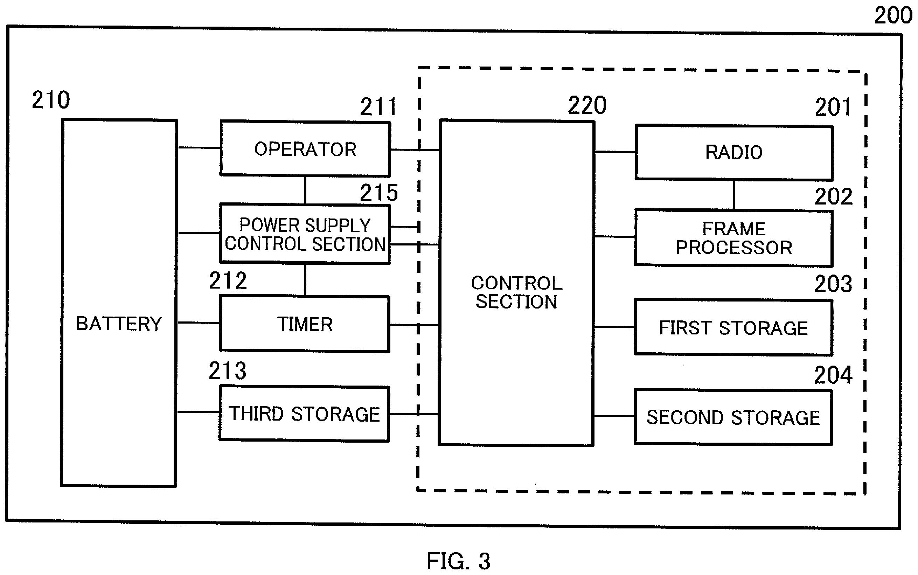

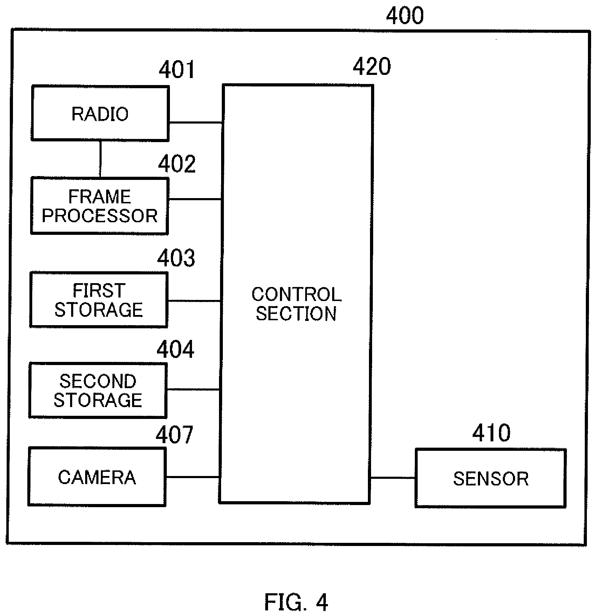

The operations of the blocks of the radio communication system according to Embodiment 1 will be described below. FIG. 2 is a block diagram illustrating a configuration example of the intercom master unit and the entrance slave unit of the radio communication system according to Embodiment 1. FIG. 3 is a block diagram illustrating a configuration example of the monitor terminal of the radio communication system according to Embodiment 1. FIG. 4 is a block diagram illustrating a configuration example of the camera of the radio communication system according to Embodiment 1. In FIGS. 2, 3, and 4, the blocks having the same functions as those of FIG. 1 are indicated by the same reference numerals as those of FIG. 1.

Referring to FIG. 2, the blocks of door-intercom master unit 100 and entrance slave unit 300 will be first described below.

In door-intercom master unit 100, radio 101 transmits and receives a radio signal to and from monitor terminal 200 and camera 400 and detects the intensity of a received electric field. Frame processor 102 constructs a transmission signal by combining a bit synchronization signal, a sync word, transmitted data, and an error detection signal. Moreover, frame processor 102 detects the sync word from the received signal, retrieves received data and the error detection signal, detects an error of the received data by using the error detection signal, selects correctly received data, and then outputs the data. First storage 103 includes nonvolatile memory and stores information necessary for communication with monitor terminal 200 and camera 400. The information includes a master-unit identification code, a slave-unit identification code, and a slave-unit call number. Second storage 104 includes volatile memory and stores information necessary for controlling door-intercom master unit 100. Display 105 displays the history of state changes of monitor terminal 200 and video transmitted from the camera. Slave unit interface 106 is connected to entrance slave unit 300 and includes a circuit for retrieving a calling signal and an audio signal that are transmitted from entrance slave unit 300, and outputting the audio signal to entrance slave unit 300. Voice input/output section 107 includes a speaker that outputs the audio and calling signals transmitted from entrance slave unit 300 and a microphone that receives the audio signal to be outputted to entrance slave unit 300. Operator 108 performs an inputting operation for a response, a shutdown, or a device setting. Timer 109 measures a time since the last communication with monitor terminal 200. After a certain period of time, timer 109 notifies the expiration of the timer to control section 120, which will be described below. Control section 120 determines a sync word and a carrier number that are used for communication with monitor terminal 200 and controls the operations of overall door-intercom master unit 100.

In entrance slave unit 300, master unit interface 306 is connected to door-intercom master unit 100 and includes a circuit for retrieving the audio signal transmitted from door-intercom master unit 100 and outputting the calling signal and the audio signal to door-intercom master unit 100. Voice input/output section 307 includes a speaker that outputs the audio signal transmitted from door-intercom master unit 100 and a microphone that receives the audio signal to be outputted to door-intercom master unit 100. Operator 308 performs an inputting operation for calling. Control section 320 controls the operations of the overall entrance slave unit 300.

Referring to FIG. 3, the blocks of monitor terminal 200 will be described below.

In monitor terminal 200, radio 201 transmits and receives the radio signal to and from door-intercom master unit 100 while switching receiving gains according to the setting. The receiving gain is set in two ways, that is, at a high gain and a low gain. At a high gain, the operation of the radio is changed so as to receive a signal at a lower reception level than at a low gain. Frame processor 202 constructs a transmission signal by combining the bit synchronization signal, the sync word, transmitted data, and the error detection signal. Moreover, frame processor 202 detects the sync word from the received signal, retrieves received data and the error detection signal, detects an error of the received data by using the error detection signal, selects correctly received data, and then outputs the data. First storage 203 includes nonvolatile memory and stores information necessary for communication with door-intercom master unit 100. The information includes a master-unit identification code, a slave-unit identification code, a slave-unit call number, and a sync word. Second storage 204 includes volatile memory and stores information necessary for controlling monitor terminal 200. Battery 210 supplies power necessary for the operation of monitor terminal 200. Operator 211 includes an input button for registration and the like. Timer 212 operates as a clock and outputs a trigger signal for turning on power supplied from battery 210 after a lapse of a set time. Third storage 213 directly receives power from battery 210 and stores the number of consecutive failures of synchronization, a selected sync word, which will be described later, the carrier number of a first control signal, and information necessary for communication of the presence confirmation signal. Power supply control section 215 supplies power from battery 210 to radio 201, frame processor 202, first storage 203, second storage 204, and control section 220, which will be described later, when the battery is inserted, a button is operated on operator 211, and at the expiration of timer 212. In response to an instruction from control section 220, power supply control section 215 interrupts power to radio 201, frame processor 202, first storage 203, second storage 204, and control section 220, which will be described later. In FIG. 3, connection between power supply control section 215 and radio 201, frame processor 202, first storage 203, and second storage 204 is omitted. Control section 220 determines the sync word used for communication with door-intercom master unit 100, the carrier number of the first control signal, and the receiving gain and controls the operations of the overall monitor terminal 200.

Referring to FIG. 4, the blocks of camera 400 will be described below.

In camera 400, radio 401 transmits and receives the radio signal to and from door-intercom master unit 100. Frame processor 402 constructs a transmission signal by combining the bit synchronization signal, the sync word, transmitted data, and the error detection signal. Moreover, frame processor 402 detects the sync word from the received signal, retrieves received data and the error detection signal, detects an error of the received data by using the error detection signal, selects correctly received data, and then outputs the data. First storage 403 includes nonvolatile memory and stores information necessary for communication with door-intercom master unit 100. The information includes the master-unit identification code, the slave-unit identification code, and the slave-unit call number. Second storage 404 includes volatile memory and stores information necessary for controlling camera 400. Camera 407 captures an image and outputs image data. Sensor 410 detects a person and outputs a detection result. Control section 420 controls the operations of overall camera 400.

The operations of the blocks of the radio communication system according to Embodiment 1 were described above.

A frame, a slot configuration, a field configuration for a transmitted/received signal, and data stored in each field in the time division multiplex communication system applied in the present invention will be described below. In the example of the present specification, the radio communication system of the present invention operates in compliance with domestic Digital Enhanced Cordless Telecommunication (DECT) (ETSI registered trademark) standards.

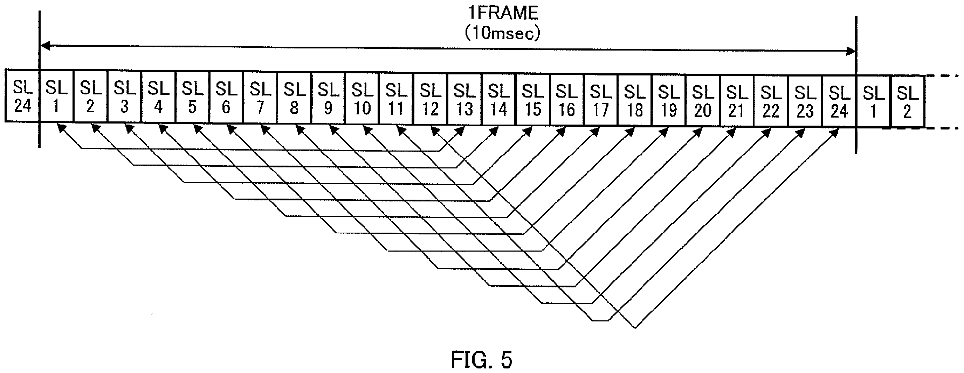

FIG. 5 illustrates a configuration example of a frame and slots in the time division multiplex communication system to which the present invention is applied. The time division multiplex communication system is used for radio communication between door-intercom master unit 100 and monitor terminal 200 and between door-intercom master unit 100 and camera 400. A frame is a basic unit of the time division multiplex communication system. The frame is equivalent to 10 msec in the domestic DECT standards. As illustrated in FIG. 5, the frame is divided into 24 slots numbered 1 to 24 (hereinafter, the slots numbered 1 to 24 will be referred to as slot 1, slot 2, ... and slot 24). Radio communication are conducted between door-intercom master unit 100 and monitor terminal 200 and between door-intercom master unit 100 and camera 400 by using a pair of slots (for example, slot 1 and slot 13) with a 5-msec spacing. By using a pair of slots with a 5-msec (12 slots) spacing, the control signal (hereinafter, will be referred to as the first control signal) including the sync word determined by door-intercom master unit 100 and the control signal (hereinafter, will be referred to as a second control signal) including a fixed sync word are transmitted with a period of 10 msec.

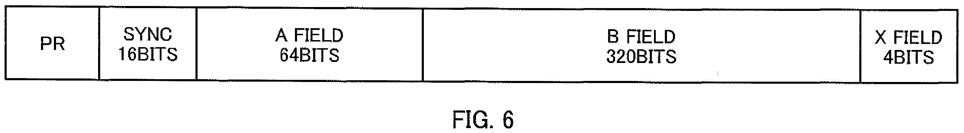

FIG. 6 illustrates a field configuration of the transmitted/received signal according to the time division multiplex communication system in Embodiment 1 of the present invention. The field configuration is provided for a signal stored in one of the slots illustrated in FIG. 5. As illustrated in FIG. 6, the field of the signal stored in one slot includes PR, SYNC, an A field, a B field, and an X field sequentially from the head. PR is a field for a bit synchronization signal. Data of repeated 1 and 0 is inserted in PR. SYNC is a field where a sync word (hereinafter, will be referred to as A sync word) for synchronizing the slot is inserted. A control station uses a 16-bit string of "1110100110001010" as an A sync word, whereas a subsidiary station uses a 16-bit string of "0001011001110101" as an A sync word. In the A field, data for communication control is inserted. In the B field, communication control data including a sync word determined for each control station of the present invention and image data or the like are inserted. In the X field, a signal for error detection of the B field is inserted.

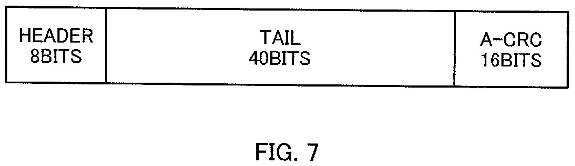

FIG. 7 illustrates the configuration of the A field of the transmitted/received signal according to Embodiment 1 of the present invention. The field configuration is provided for a signal stored in the A field illustrated in FIG. 6. As illustrated in FIG. 7, the A field includes a header, a tail, and A-CRC sequentially from the head. The header is a field where information including a tail category and the configuration of the B field is inserted. The tail is a field where paging information, a master-unit identification code, a wireless-connection control message, and a call-connection control message or the like are inserted. A-CRC is a field where a signal for error detection of the A field is inserted. In the tail, one kind of message is transmitted for each slot from among the paging information, the master-unit identification code, master unit information, the wireless-connection control message, and the call-connection control message. As a second control signal transmitted for synchronizing the subsidiary station, the paging information, the master-unit identification code, and the master unit information are sequentially transmitted in a predetermined order during standby.

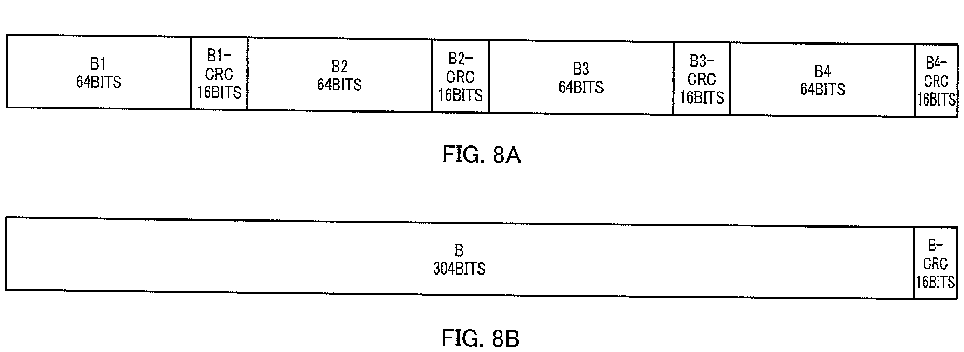

FIGS. 8A and 8B illustrate the configuration of the B field of the transmitted/received signal according to Embodiment 1 of the present invention, that is, the field configuration of a signal stored in the B field illustrated in FIG. 6. FIG. 8A indicates a configuration for inserting the communication control data into the B field and FIG. 8B indicates a configuration for inserting data such as image data into the B field. As illustrated in FIG. 8A, the B field in which the communication control data is inserted includes B1, B1-CRC, B2, B2-CRC, B3, B3-CRC, B4, and B4-CRC sequentially from the head. B1, B2, B3, and B4 are fields where the communication control data including a sync word determined for each control station according to the present invention and information for synchronization and communication between the subsidiary station and the control station are inserted, the information including the master-unit identification code, slot information, and available slot information. Subsequent B1-CRC is a field where a signal for detecting an error of B1 is inserted, B2-CRC is a field where a signal for detecting an error of B2 is inserted, B3-CRC is a field where a signal for detecting an error of B3 is inserted, and B4-CRC is a field where a signal for detecting an error of B4 is inserted. As illustrated in FIG. 8B, the B field where image data is inserted includes B and B-CRC sequentially from the head. B is a field where the image data is inserted and B-CRC is a field where a signal for detecting an error of B is inserted.

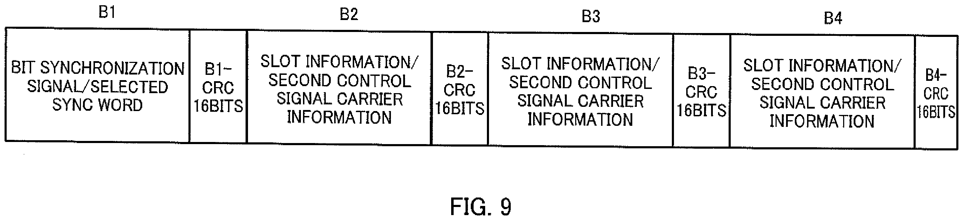

FIG. 9 illustrates data of the B field of the first control signal according to Embodiment 1 of the present invention, that is, data stored in the fields of B1, B2, B3, and B4 in FIG. 8A. As illustrated in FIG. 9, B1 stores a bit synchronization signal including a bit string of repeated 1 and 0 and a selected sync word that is a sync word for synchronizing the slot, the sync word being determined by control section 120 of door-intercom master unit 100. B2, B3, and B4 each store slot information for notification of the number of the slot to which the first control signal is transmitted and second control-signal carrier information for notification of a carrier number used for transmitting the second control signal.

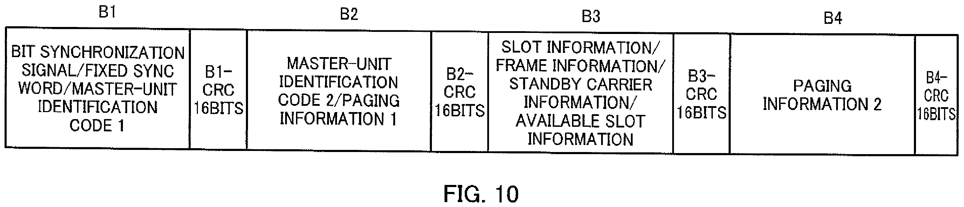

FIG. 10 illustrates data of the B field of the second control signal according to Embodiment 1 of the present invention, that is, data stored in the fields of B1, B2, B3, and B4 in FIG. 8A. As illustrated in FIG. 10, B1 stores a bit synchronization signal including a bit string of repeated 1 and 0, a fixed sync word (a 16-bit string of "1110001101100100" in the domestic DECT standards) for synchronizing the slot determined by the communication system, and master-unit identification code 1 that is a string of the first 28 bits of a 40-bit master-unit identification code. B2 stores master-unit identification code 2 that is a string of the other 12 bits of the master-unit identification code and paging information 1 that is the first bit string of paging information for notification of a call of the subsidiary station. B3 stores slot information for communicating the number of the slot to which the first control signal is transmitted, frame information for notification of the number of a frame to which the first control signal is transmitted, standby carrier information for notification of a carrier number on standby for a signal for requesting the activation of a communication link from the subsidiary station, and available slot information for notification of an available slot for the communication link with the subsidiary station. B4 stores paging information 2 that is the other bit string of paging information.

The frame, the slot configuration, the field configuration for the transmitted/received signal, and data stored in each field in the time division multiplex communication system applied in the present invention were described above.

A message used by monitor terminal 200 and door-intercom master unit 100 in a presence confirmation operation will be described below.

Signals used for the presence confirmation operation include a presence confirmation signal that is a combination of a radio-communication activation request and a notification message for presence confirmation and is transmitted from monitor terminal 200 to door-intercom master unit 100 and a signal for confirming radio communication activation, the signal being transmitted from door-intercom master unit 100 to monitor terminal 200. A data string of the radio-communication activation request of the presence confirmation signal is stored in the A field illustrated in FIG. 6 and includes an identifier indicating that the message is an activation request, master-unit identification information that specifies the control station of a destination, and a slave-unit call number for notification of a source subsidiary station. The radio-communication activation request corresponds to expedited_access_request of an M-channel message of the DECT standards, the master-unit identification information corresponds to Function Module ID (FMID), and the slave-unit call number corresponds to PubMed ID (PMID). The notification message for presence confirmation of the presence confirmation signal is stored in the B field illustrated in FIG. 6 and includes a message data length and an identifier indicating that the message is a notification message of presence confirmation. The data string of the signal for confirming radio communication activation is stored in the A field illustrated in FIG. 6 and includes an identifier indicating that the message is a signal for confirming radio communication activation, master-unit identification information that specifies the control station of a source, and a slave-unit call number for specifying a destination subsidiary station. The signal for confirming radio communication activation corresponds to bearer_confirm of an M-channel message of the DECT standards, the master-unit identification information corresponds to FMID, and the slave-unit call number corresponds to PMID.

The message used by monitor terminal 200 and door-intercom master unit 100 in a presence confirmation operation has been described thus far.

A message used by camera 400 and door-intercom master unit 100 in an image communication operation will be described below.

Signals used for the image communication operation include a radiocommunication activation request signal transmitted from camera 400 to door-intercom master unit 100, an image data signal, and a radio-communication activation confirmation signal transmitted from door-intercom master unit 100 to camera 400. The data string of the radio-communication activation request is stored in the A field illustrated in FIG. 6 and includes an identifier indicating that the message is an activation request, master-unit identification information that specifies the control station of a destination, and a slave-unit call number for notification of a source subsidiary station. The radio-communication activation request corresponds to access_request of an M-channel message of the DECT standards, the master-unit identification information corresponds to FMID, and the slave-unit call number corresponds to PMID. The image data is stored in the B field illustrated in FIG. 6 and includes the packet number, the data length, and the body of the image data. The data string of the signal for confirming radio communication activation is stored in the A field illustrated in FIG. 6 and includes an identifier indicating that the message is a signal for confirming radio communication activation, master-unit identification information that specifies the control station of a source, and a slave-unit call number for specifying a destination subsidiary station. The signal for confirming radio communication activation corresponds to bearer_confirm of an M-channel message of the DECT standards, the master-unit identification information corresponds to FMID, and the slave-unit call number corresponds to PMID.

The message used by camera 400 and door-intercom master unit 100 in an image communication operation has been described thus far.

Slave unit registration for registering the subsidiary station for the control station will be described below. In the slave unit registration, a radio link is established between the control station and the subsidiary station, the control station and the subsidiary station exchange the identification codes (the master-unit identification code and the slave-unit identification code) with each other, and the control station allocates a slave-unit call number to the subsidiary station, the slave-unit call number being used during communication connection. When the slave unit registration is started, the control station (door-intercom master unit 100) provides a notification of the slave unit registration by using the second control signal. The subsidiary station (monitor terminal 200, camera 400) at the start of slave unit registration performs detection using the A sync word "1110100110001010" transmitted in SYNC of the A field, and then the subsidiary station establishes synchronization with the control station (door-intercom master unit 100) and starts communication.

The master-unit identification code and the slave-unit identification code are provided for allocating values to radio communication devices compliant with the same communication system while avoiding overlaps during manufacturing. The identification codes are written in first storage 103 in door-intercom master unit 100 of the radio system according to Embodiment 1, are written in first storage 203 in monitor terminal 200, and are written in first storage 403 in camera 400. Moreover, an identification code sent from a target of writing during slave unit registration and a slave-unit call number allocated to the subsidiary station by the control station are also written in first storage 103 in door-intercom master unit 100, are written in first storage 203 in monitor terminal 200, and are written in first storage 403 in camera 400.

Slave unit registration for registering the subsidiary station for the control station has been described thus far.

The operations of door-intercom master unit 100 as the control station at power-on according to Embodiment 1 of the present invention will be described below.

When the power is turned on, door-intercom master unit 100 first determines a selected sync word based on the identification code of door-intercom master unit 100 (master-unit identification code), the sync word being transmitted to synchronize the slot in the field of B1 of the first control signal. The radio communication system according to Embodiment 1 includes 16-bit strings used as eight different variable sync words numbered 1 to 8. Door-intercom master unit 100 first selects one of the bit strings of the eight different variable sync words according to the 35th, 36th, and 37th values of the master-unit identification code. Table 1 indicates a comparison between the 35th, 36th, and 37th values of the master-unit identification code and the first selected numbers and bit strings of selected sync words. As indicated in Table 1, for example, when the 35th value is "0", the 36th value is "1", and the 37th value is "1" in the master-unit identification code, the bit string "0101100100001111" of No. 4 is selected as the bit string of the selected sync word. When the bit string of the selected sync word is included in a bit string except for a bit string transmitted as a selected sync word from the bit string of a periodically transmitted signal, the bit string of the selected sync word of the subsequent number is selected (for example, 5 for the first selected number of 4 or 1 for the first selected number of 8). In this way, the bit string of the periodically transmitted signal and the selected sync words are sequentially compared with each other such that the bit string of the selected sync word is not included in a bit string except for a bit string transmitted as a selected sync word from the bit string of the periodically transmitted signal, so that the selected sync word is determined. When the bit strings of all the selected sync words are included in a bit string transmitted as a selected sync word from the bit string of the periodically transmitted signal, the bit string of the first selected sync word is used. For example, when the master-unit identification code is "0010110010000111101100100001111011011000", "0010110010000111101100100001111011011000" is periodically transmitted as the master-unit identification code at the tail of the A field of the second control signal. When the master-unit identification code is "0010110010000111101100100001111011011000", the 35th value is "0", the 36th value is "1", and the 37th value is "1" in the master-unit identification code. The bit string of "0101100100001111" of No. 4 is first selected. However, the bit string is included in the second to seventeenth bit strings of the master-unit identification code and the bit string of "0110010000111101" of No. 5 is included in the eighteenth to thirty-third bit strings of the master-unit identification code. Thus, the bit string of "1100100001111010" of No. 6 is selected as the bit string of the selected sync word. In this example, a sync word is reselected when the bit string transmitted as the master-unit identification code at the tail of the A field of the second control signal overlaps with the bit string of the selected sync word. The sync word is reselected also in the case where the bit string of the selected sync word is included in a 16-bit string that crosses the master-unit identification code of the tail of the periodically transmitted A field and subsequent A-CRC, a 16-bit string of A-CRC following the master-unit identification code of the tail of the A field, a 16-bit string that crosses master-unit identification code 1 of the B field of the second control signal and subsequent B1-CRC, a 16-bit string of B1-CRC of the second control signal, and a 16-bit string that crosses B1-CRC of the B field of the second control signal and subsequent master-unit identification code 2.

**[Table 1]**

| NUMBER | SELECTED SYNC WORD BIT STRING | MASTER-UNIT IDENTIFICATION CODE 35/36/37 |
|---|---|---|
| 1 | 1111010110010000 | 0/0/0 |
| 2 | 1110101100100001 | 0/0/1 |
| 3 | 1101011001000011 | 0/1/0 |
| 4 | 0101100100001111 | 0/1/1 |
| 5 | 0110010000111101 | 1/0/0 |
| 6 | 1100100001111010 | 1/0/1 |
| 7 | 0010000111101011 | 1/1/0 |
| 8 | 0100001111010110 | 1/1/1 |

Subsequently, door-intercom master unit 100 determines the carrier of the first control signal based on the identification code of door-intercom master unit 100. Specifically, door-intercom master unit 100 selects one of four carriers usable in an environment that coexists with a personal handyphone system (PHS) authorized in the domestic DECT, the carrier being selected according to the thirty-third and thirty-fourth bits of the 40-bit master-unit identification code. Table 2 indicates an example of correspondence between the 33rd and 34th values of the master-unit identification code and a carrier selected as a carrier of the first control signal. As indicated by Table 2, for example, when the 33rd value of the master-unit identification code is "0" and the 34th value is "1", a carrier of carrier No. 3 with a carrier frequency of 1897.344 MHz is selected as a carrier of the first control signal.

**[Table 2]**

| CARRIER FREQUENCY [MHz] | CARRIER NUMBER | MASTER-UNIT IDENTIFICATION CODE 33/34 |
|---|---|---|
| 1895.616 | 4 | 1/0 |
| 1897.344 | 3 | 0/1 |
| 1899.072 | 2 | - |
| 1900.800 | 1 | - |
| 1902.528 | 0 | 0/0 |
| 1904.256 | 9 | 1/1 |

Subsequently, door-intercom master unit 100 performs reception for selecting the transmission slot of the first control signal and the transmission carrier of the second control signal. Door-intercom master unit 100 performs reception of all slots in the frame for all the carriers of carrier numbers 0, 1, 2, 3, 4, and 9 in Table 2. Thereafter, from among the slots of slot numbers 13 to 24 in a second half of the frame, door-intercom master unit 100 selects, as the transmission slot of the first control signal, the slot at a reception level of the first determined carrier of the first control signal, that is, the slot with a disturbing wave at the lowest level. Door-intercom master unit 100 then compares the reception levels of the carriers received in the slot selected as the transmission slot of the first control signal and the slot at a distance of 12 slots from the transmission slot, and selects the carrier at the lowest reception level, that is, the carrier with a disturbing wave at the lowest level as the transmission carrier of the second control signal.

The operations of door-intercom master unit 100 as the control station at power-on according to Embodiment 1 of the present invention were described above.

The operations of door-intercom master unit 100 as the control station during standby according to Embodiment 1 of the present invention will be described below.

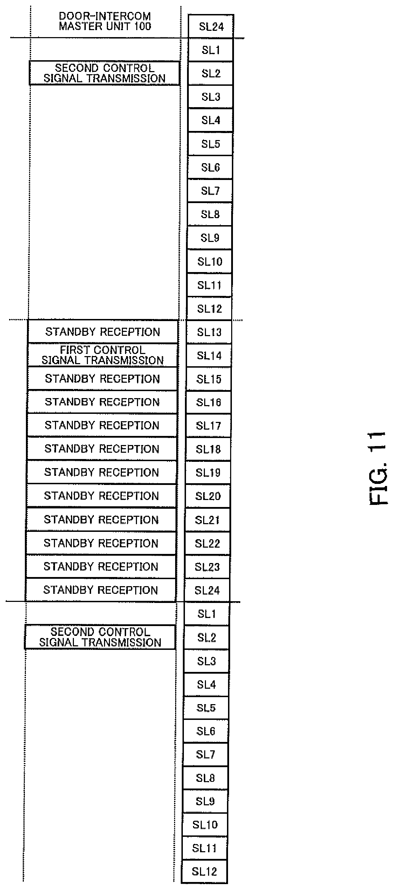

FIG. 11 illustrates an example of the transmission and standby reception of the first control signal and the second control signal during standby of door-intercom master unit 100 according to Embodiment 1 of the present invention. Door-intercom master unit 100 on standby transmits the first control signal and the second control signal and waits for reception of a request for establishment of a communication link from the subsidiary station. Moreover, in a slot on standby for reception, door-intercom master unit 100 detects the intensity of a received electric field and stores the level of a disturbing wave for each carrier in the slots. The first control signal and the second control signal are transmitted using a pair of slots remote from each other at a distance of 12 slots in the frame. The second control signal is transmitted in a first half of the frame, whereas the first control signal is transmitted in a second half of the frame. A request for establishment of the communication link from the control station is received in 11 slots of the 12 slots in the second half of the frame except for the slot where the first control signal is transmitted. In the example of FIG. 11, door-intercom master unit 100 transmits the first control signal in slot 14, transmits the second control signal in slot 2, and receives a request for establishment of the communication link from the control station in slot 13 and slots 15 to 24, that is, 11 slots in total. As described in the operations at power-on, the transmission slot numbers of the first control signal and the second control signal and a transmission carrier number are determined according to the master-unit identification code and the level of a disturbing wave in each slot.

The operations of door-intercom master unit 100 as the control station during standby according to Embodiment 1 of the present invention were described above.

The operations of moving the slot of the control signal in a standby status of door-intercom master unit 100 will be described below. Door-intercom master unit 100 operates as the control station according to Embodiment 1 of the present invention.

During standby, door-intercom master unit 100 stops transmitting the first control signal and the second control signal in a frame of a constant period, receives the signal of the carrier determined as the transmission carrier of the first control signal in the slot where the first control signal is transmitted, and detects the intensity of the received electric field. Door-intercom master unit 100 then compares the intensities of received electric fields in the transmission carrier of the first control signal between the slot where the first control signal is transmitted and the slot on standby for reception, that is, the reception levels of disturbing waves. Thereafter, door-intercom master unit 100 selects the slot where a disturbing wave is received at the lowest level. From the subsequent frame, door-intercom master unit 100 restarts transmitting the first control signal at a carrier frequency determined based on the master-unit identification code in the selected slot. Door-intercom master unit 100 then compares the intensities of received electric fields of carriers during standby reception in the slot selected as the transmission slot of the first control signal and the slot at a distance of 12 slots from the transmission slot, and selects the carrier where an electric field is received with the lowest intensity, that is, the carrier with a disturbing wave received at the lowest level. Thereafter, door-intercom master unit 100 restarts transmitting the second control signal in the carrier selected in the slot at a distance of 12 slots from the slot selected as the transmission slot of the first control signal.

When an electric field is received with sufficiently low intensity when the signal of the carrier determined as the transmission carrier of the first control signal in the slot where the first control signal is transmitted, the transmission of the first control signal and the second control signal may be restarted, without starting a movement of the control signals, in the slots where the first control signal and the second control signal are transmitted in a previous frame.

When multiple radio communication apparatuses are provided in a communication area, signals transmitted from the radio communication apparatuses may become disturbing waves to the radio communication apparatuses other than destinations, leading to communication failures such as faulty synchronization. Each of the radio communication apparatuses starts communication after selecting timing so as not to cause failures in other communication. However, the clock shifts of the radio communication apparatuses may shift the timing of transmission among the radio communication apparatuses with the passage of time. Thus, transmission sections between the radio communication apparatuses may overlap each other from the heads or tails, resulting in difficulty in reception in an overlapping part. In the radio communication system of the present invention, as described above, the slot for periodically transmitting the first control signal is replaced with the slot free from disturbing waves. This can suppress the occurrence of communication failures such as faulty synchronization caused by radio frequency interference.

Furthermore, door-intercom master unit 100 divides a field into multiple ones in the slot, transmits a sync word for synchronization (selected sync word) in the second field while avoiding the first field, and transmits information necessary for receiving the second control signal in the multiple fields including the last field. A sufficient time is provided between the beginning of an overlap between the head or tail of the first control signal and the transmission signals of other radio communication apparatuses and the occurrence of an overlap between the transmission signal of the sync word for synchronization or the information necessary for receiving the second control signal and the transmission signals of other radio communication apparatuses. Thus, door-intercom master unit 100 can select the slot having only a few disturbing waves and move the first control signal in a long period of time, thereby reducing an increase in search time when a search time is increased by the stop of the first control signal for detecting a disturbing wave and a search collision of monitor terminal 200.

A movement of the control signal by door-intercom master unit 100 during standby has been described thus far. Door-intercom master unit 100 operates as the control station according to Embodiment 1 of the present invention.

The operations of monitor terminal 200 as the subsidiary station at power-on according to Embodiment 1 of the present invention will be described below. The operations of monitor terminal 200 at power-on will be described below, monitor terminal 200 being registered for door-intercom master unit 100.

When the power is turned on, monitor terminal 200 first reads, from first storage 203, information necessary for communicating the presence confirmation signal with door-intercom master unit 100 and writes the information in third storage 213, the information including the master-unit identification code and the slave-unit call number that are written upon registration. Subsequently, monitor terminal 200 determines the sync word (selected sync word) and the carrier number of the first control signal based on the master-unit identification code and writes the code in third storage 213. Monitor terminal 200 writes an initial value "0" for the number of consecutive failures of synchronization in third storage 213. Thereafter, a starting time for transmitting the presence confirmation signal is set in timer 212 and power supply to radio 201, frame processor 202, first storage 203, second storage 204, and control section 220 is interrupted by power supply control section 215, shifting to a standby status. A method of determining the selected sync word and the carrier number of the first control signal from the master-unit identification code is identical to an operation of determining the selected sync word and the carrier number of the first control signal from the identification code of door-intercom master unit 100 at power-on, and thus the explanation thereof is omitted.

The operations of monitor terminal 200 as the subsidiary station at power-on according to Embodiment 1 of the present invention were described above.

The standby status of monitor terminal 200 will be described below.

In the standby status of monitor terminal 200, power supply to radio 201, frame processor 202, first storage 203, second storage 204, and control section 220 is interrupted until the transmission of a subsequent presence confirmation signal, thereby suppressing power consumption. In the standby status, third storage 213 receives power supplied from battery 210 and stores the master-unit identification code, the slave-unit call number, the selected sync word and the carrier number of the first control signal, and the number of consecutive failures of synchronization. Likewise, timer 212 also receives power supplied from battery 210 in the standby status. Timer 212 continues counting a time set by control section 220 before shifting to the standby status.

The standby status of monitor terminal 200 has been described thus far.

The operations of communicating the presence confirmation signal between door-intercom master unit 100 and monitor terminal 200 will be described below.

In the following operations, the first control signal and the second control signal that are transmitted from door-intercom master unit 100 are first received by monitor terminal 200 and time-division multiplex communication are synchronized.

In the standby status, timer 212 outputs a trigger signal for turning on power supplied from battery 210 at the expiration of the timer, the trigger signal being outputted to power supply control section 215. When receiving the trigger signal from timer 212, power supply control section 215 supplies power to radio 201, frame processor 202, first storage 203, second storage 204, and control section 220. When power is supplied, control section 220 detects an activation factor from the states of operator 211 and timer 212. When detecting that the activation factor is the expiration of timer 212, control section 220 reads the master-unit identification code, the slave-unit call number, the number of consecutive failures of synchronization, and the selected sync word and the carrier number of the first control signal from third storage 213. Control section 220 controls radio 201 such that radio 201 operates in a search status of the first control signal for successively receiving signals at a frequency corresponding to the carrier number of the first control signal and radio 201 is synchronized with the selected sync word read by frame processor 202. The signals are successively received with a high gain when the read number of consecutive failures of synchronization is not larger than a predetermined number of times, whereas the signals are successively received with a low gain when the read number of consecutive failures of synchronization exceeds the predetermined number of times. Frame processor 202 searches for a selected sync word through strings of received data that is outputted from radio 201. When detecting the selected sync word, frame processor 202 retrieves subsequent B2, B2-CRC, B3, B3-CRC, B4, and B4-CRC, confirms the presence or absence of reception errors of B2, B3, and B4 through B2-CRC, B3-CRC, and B4-CRC, and notifies control section 220 of the normally received data strings of B2, B3, and B4. When being notified of any one of B2, B3, and B4, control section 220 retrieves, from the normally received data strings, slot information for notification of the transmission slot of the first control signal and second control-signal carrier information for notification of the transmission carrier number of the second control signal. Subsequently, control section 220 controls frame processor 202 so as to establish the slot synchronization of time-division multiplex communication with door-intercom master unit 100 based on the timing of receiving the selected sync word and the slot information, detect the A sync word in the 12th slot after the slot where the selected sync word is received (the slot where the first control signal is received), and output data received in the subsequent A field and B field. Moreover, control section 220 controls radio 201 so as to stop the search of the first control signal and receive a signal with a high gain at the carrier frequency of the second control signal indicated by the second control-signal carrier information in the 12th slot after the slot where the selected sync word is received (the slot where the first control signal is received). When the second control signal transmitted from door-intercom master unit 100 is received by radio 201, a received data string is outputted to frame processor 202. Frame processor 202 searches for the A sync word through strings of received data that is outputted from radio 201. When detecting the A sync word, frame processor 202 retrieves the header, tail, and A-CRC of the subsequent A field and B1, B1-CRC, B2, B2-CRC, B3, B3-CRC, B4, and B4-CRC of the B field, confirms the presence or absence of reception errors of the header, the tail, B1, B2, B3, and B4 through A-CRC, B1-CRC, B2-CRC, B3-CRC, and B4-CRC, and notifies control section 220 of the normally received header, tail, data strings of B1, B2, B3, and B4. Control section 220 retrieves the master-unit identification code from the header and the tail that are indicated by frame processor 202, and then control section 220 compares the code with the master-unit identification code read from third storage 213. When the header or the tail is not indicated by frame processor 202 or when the header and the tail that are indicated by frame processor 202 are data other than the master-unit identification code, control section 220 compares a master-unit identification code that is a combination of master-unit identification code 1 of the B1 field indicated by frame processor 202 and master-unit identification code 2 of the B2 field with the master-unit identification code read from third storage 213. When the received master-unit identification code agrees with the master-unit identification code read from third storage 213, control section 220 writes "0" in the number of consecutive failures of synchronization in third storage 213 and starts an operation of communicating the presence confirmation signal.

When the master-unit identification code cannot be received, monitor terminal 200 operates so as to receive the second control signal of the subsequent frame, the control signal being transmitted every 10 msec. Monitor terminal 200 operates in the above-mentioned manner, retrieves the master-unit identification code from the received signal, and continues to determine whether the signal has been received from the registered door-intercom master unit 100.

When the master-unit identification codes do not agree with each other, monitor terminal 200 operates so as to stop a receiving operation of the second control signal and restart a search for the first control signal. Specifically, when the received master-unit identification code and the master-unit identification code read from third storage 213 do not agree with each other, control section 220 performs control so as to stop a receiving operation of the second control signal and restart a search for the first control signal. At this point, as in a search for the first control signal when the standby status is canceled, control section 220 controls radio 201 and frame processor 202 at 10 msec after the completion of the reception of the selected sync word of the first control signal so as to set a reception gain according to a reception status and return to a search for the first control signal for successively receiving signals at the carrier frequency of the first control signal, and then control section 220 restarts a search for the first control signal.

When the search time of the first control signal exceeds a certain time without detection of the selected sync word and when the total time of a search for the first control signal exceeds a certain time, during which master-unit identification codes are repeatedly compared with each other by a search for the first control signal and the reception of the second control signal, without establishing synchronization with registered door-intercom master unit 100, control section 220 of monitor terminal 200 instructs power supply control section 215 to update the number of consecutive failures of synchronization by one, write the updated number of consecutive failures of synchronization in third storage 213, set timer 212 for a time period before subsequent presence confirmation, and shut off power from battery 210. In response to an instruction to shut off power from control section 220, power supply control section 215 shuts off power supply to radio 201, frame processor 202, first storage 203, second storage 204, and control section 220, so that monitor terminal 200 is placed into a standby status.

When the search time of the first control signal exceeds a certain time without detection of the selected sync word and when the total time of a search for the first control signal exceeds a certain time, during which master-unit identification codes are repeatedly compared with each other by a search for the first control signal and the reception of the second control signal, without establishing synchronization with registered door-intercom master unit 100, control section 220 of monitor terminal 200 may change a time period before subsequent presence confirmation according to the number of consecutive failures of synchronization. For example, as compared with the case where synchronization is successfully established and the case where the number of consecutive failures of synchronization exceeds the predetermined number of times, control section 220 sets a shorter time period before subsequent presence confirmation when the number of consecutive failures of synchronization is not larger than the predetermined number of times. Thus, when the interference of radio signals transmitted from other communication devices temporarily prevents monitor terminal 200 within the communication radius of door-intercom master unit 100 from receiving the first control signal and the second control signal, an operation of communicating the presence confirmation signal can be quickly restarted, thereby reducing the occurrence of erroneous notification that monitor terminal 200 has moved out of the communication radius.

When the search time of the first control signal exceeds the certain time without detection of the selected sync word, control section 220 of monitor terminal 200 may transmit the presence confirmation signal after performing continuous reception in the carriers of carrier numbers 0, 1, 2, 3, 4, and 9 according to the number of consecutive failures of synchronization and receiving a fixed sync word to establish synchronization with door-intercom master unit 100. Thus, even when monitor terminal 200 within the communication radius of door-intercom master unit 100 poorly receives the first control signal, the presence confirmation signal is successfully transmitted, thereby reducing the occurrence of erroneous notification that monitor terminal 200 has moved out of the communication radius.

As mentioned above, the first control signal and the second control signal that are transmitted from door-intercom master unit 100 are received by monitor terminal 200 and time-division multiplex communication are synchronized.

The operations of transmitting and receiving the presence confirmation signal and transmission/reception for confirming communication activation will be described below.

When the master-unit identification codes agree with each other, monitor terminal 200 shifts to an operation of communicating the presence confirmation signal. When the master-unit identification codes agree with each other, control section 220 determines the slot and the carrier number for communicating the presence confirmation signal (hereinafter, a pair of slots for transmitting and receiving the presence confirmation signal will be referred to as a communication slot and a carrier for transmitting and receiving the presence confirmation signal will be referred to as "communication carrier") based on the standby carrier information and available slot information that are indicated in the B3 field of the second control signal. Subsequently, control section 220 controls radio 201 so as to receive the signal of the communication carrier in the communication slot. When the intensity of a received electric field of the received signal (that is, the level of a disturbing wave) is at most a specified value, control section 220 controls radio 201 and frame processor 202 so as to generate a data string of the presence confirmation signal and transmit the presence confirmation signal and receive the signal for confirming radio communication activation in the communication slot by using the communication carrier.

During standby, door-intercom master unit 100 operates such that a carrier number received in each frame is indicated using the standby carrier information of the second control signal, receiving carriers are sequentially changed for respective frames in each slot, and a radio-communication activation request is received from the subsidiary station. The data string received by radio 101 is outputted to frame processor 102. Frame processor 102 searches for the A sync word through a string of received data that is outputted from radio 101. When detecting the A sync word, frame processor 102 retrieves the header, the tail, and A-CRC of the subsequent A field and B and B-CRC of the B field, confirms the presence or absence of reception errors of the header, the tail, and B through A-CRC and B-CRC, and notifies control section 120 of the normally received header, tail, and data string of B. When the data string indicated from frame processor 102 is the presence confirmation signal addressed to control section 120 from registered monitor terminal 200 that is stored in first storage 103, control section 120 controls radio 101 and frame processor 102 so as to transmit the signal for confirming radio communication activation in the slot at a distance of 12 slots from the slot where the presence confirmation signal is received, and stop communication after the completion of transmission. Subsequently, control section 120 displays that monitor terminal 200 is within the communication radius on display 105, and then restarts timer 109.

Thereafter, when a message for communication activation confirmation is received from door-intercom master unit 100, a time until subsequent presence confirmation is set in timer 212 by control section 220 of monitor terminal 200, and then control section 220 instructs power supply control section 215 to shut off power from battery 210. In response to an instruction to shut off power from control section 220, power supply control section 215 shuts off power supply to radio 201, frame processor 202, first storage 203, second storage 204, and control section 220. Hence, monitor terminal 200 is placed on standby.

When a message for communication activation confirmation cannot be received in the 12th slot after the slot where the presence confirmation signal is transmitted, as in the foregoing operations, control section 220 of monitor terminal 200 repeats an operation of determining the slot and carrier for transmission of the presence confirmation signal again from the standby carrier information of the second control signal and retransmitting the presence confirmation signal. Thereafter, when a message for communication activation confirmation cannot be received in a certain period of time, a time until subsequent presence confirmation is set in timer 212, and then power supply control section 215 is instructed to shut off power from battery 210. In response to an instruction to shut off power from control section 220, power supply control section 215 shuts off power supply to radio 201, frame processor 202, first storage 203, second storage 204, and control section 220. Hence, monitor terminal 200 is placed on standby.

The operations of transmitting and receiving the presence confirmation signal and transmission/reception for confirming communication activation were described above. Moreover, the operations of communicating the presence confirmation signal between door-intercom master unit 100 and monitor terminal 200 were described above.

The operations of providing a notification of a state of monitor terminal 200 between door-intercom master unit 100 and smartphone 500 will be described below.

When monitor terminal 200 is registered, control section 120 of door-intercom master unit 100 starts timer 109, starts monitoring intervals of reception of the presence confirmation signal transmitted from monitor terminal 200, and stores a state "within a range" of monitor terminal 200 and time information in second storage 104. When control section 120 is notified of the expiration of timer 109, control section 120 stores a state "out of a range" of monitor terminal 200 and the time information in second storage 104 and notifies smartphone 500 that monitor terminal 200 has moved out of the radius. Smartphone 500 displays that monitor terminal 200 has moved out of the radius. When receiving the presence confirmation signal from monitor terminal 200, control section 120 restarts timer 109. When a state of monitor terminal 200 is "out of a range" in second storage 104, control section 120 stores a state "within a range" of monitor terminal 200 and the time information in second storage 104 and notifies smartphone 500 that monitor terminal 200 has returned into the radius. Smartphone 500 displays that monitor terminal 200 has returned into the radius.

The operations of providing a notification of a state of monitor terminal 200 between door-intercom master unit 100 and smartphone 500 were described above.

The operations of camera 400 at power-on and operations in a standby status according to Embodiment 1 of the present invention will be described below. In the explanation of the operations at power-on, camera 400 is registered in door-intercom master unit 100.

When the power is turned on, control section 420 of camera 400 controls radio 401 so as to sequentially perform reception at carrier frequencies for carrier numbers 0, 1, 2, 3, 4, and 9 until the second control signal transmitted from registered door-intercom master unit 100 is received, and control section 420 controls frame processor 402 in synchronization with the A sync word. Frame processor 402 searches for the A sync word through a string of received data that is outputted from radio 401. When detecting the A sync word, frame processor 402 retrieves the header, the tail, and A-CRC of the subsequent A field, confirms the presence or absence of reception errors of the header and the tail through A-CRC, and notifies control section 420 of the normally received data strings of the header and the tail. Control section 420 retrieves the master-unit identification code from the header and the tail that are indicated by frame processor 402, and then control section 420 compares the code with the master-unit identification code read from first storage 403. When the master-unit identification codes agree with each other, control section 420 is placed on standby in which the slot with received control signal is received with a period of 10 msec. Control section 420 during standby controls radio 401 and frame processor 402 so as to perform reception at carrier frequencies for carrier numbers 0, 1, 2, 3, 4, and 9 and monitor the level of a disturbing wave in the slot other than the slot where the second control signal is received; meanwhile, information necessary for activating data communication is received, the information including available slot information transmitted by the second control signal.

The operations of camera 400 at power-on and operations in a standby status according to Embodiment 1 of the present invention were described above.

The operations of transmitting image data to door-intercom master unit 100 from camera 400 according to Embodiment 1 of the present invention will be described below.

When sensor 410 of camera 400 detects a person during standby and notifies control section 420 of the detection, control section 420 determines the slot and the carrier, which are used for activating communication of image data, based on the available slot information received during standby and the level of a disturbing wave measured during standby. Control section 420 controls radio 401 so as to perform reception using the determined slot and carrier. When the intensity of a received electric field of the received signal (that is, the level of a disturbing wave) is at most the specified value, control section 420 controls radio 401 and frame processor 402 so as to generate a data string of a radio-communication activation request, transmit the radio-communication activation request, and receive the signal for confirming radio communication activation at the carrier frequency where the activation request is transmitted in the 12th slot. Subsequently, when control section 420 receives the signal for confirming radio communication activation and establishes an interactive communication link with door-intercom master unit 100, control section 420 exchanges call-connection control messages for activating data communication, activates a one-way data communication slot for transmitting image data, and starts transmitting image data captured by camera 407.

When door-intercom master unit 100 during standby receives a radiocommunication activation request from registered camera 400 in the slot on standby for reception, control section 120 controls radio 101 and frame processor 102 so as to transmit the signal for confirming radio communication activation at the carrier frequency where the activation request is transmitted in the 12th slot. Subsequently, by using the slot where the radio-communication activation request is received and the slot where the signal for confirming radio communication activation is transmitted, control section 120 exchanges call-connection control messages for activating data communication, activates a one-way data communication slot for receiving image data, and starts receiving image data captured by camera 407.

The operations of transmitting image data to door-intercom master unit 100 from camera 400 according to Embodiment 1 of the present invention were described above.

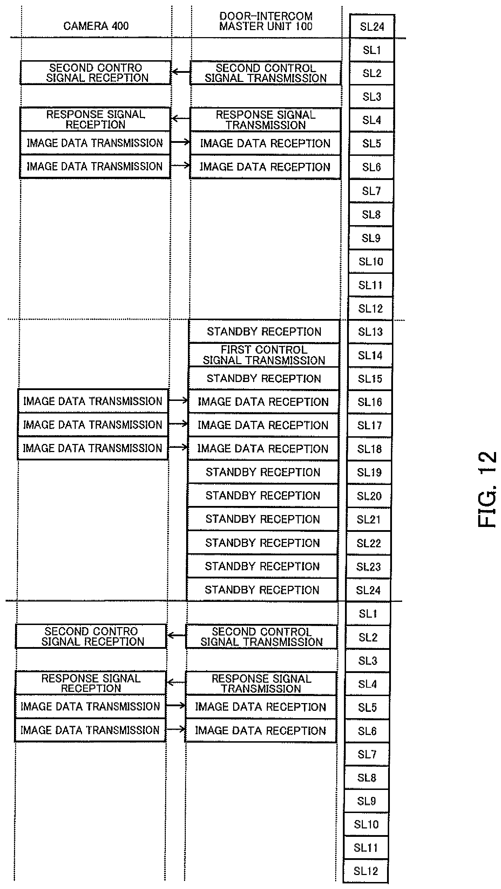

Referring to FIG. 12, a usage example of the slots during camera data communication according to Embodiment 1 of the present invention will be described below.

FIG. 12 illustrates a usage example of the slots during camera data communication according to Embodiment 1 of the present invention. In slot 4 and slot 16 at a distance of 12 slots, interactive communication between door-intercom master unit 100 and camera 400 are activated and call-connection control messages for activating data communication are exchanged between slot 4 and slot 16. Thereafter, the one-way data communication slot for transmitting and receiving image data is activated in slot 5 and slot 17 at a distance of 12 slots and slot 6 and slot 18 at a distance of 12 slots, the transmission of image data from camera 400 is started, and door-intercom master unit 100 transmits a response signal for providing a notification of reception of image data and requesting retransmission during data communication. As illustrated in FIG. 12, image data is transmitted from camera 400 in five slots in one frame during data communication and the response signal for providing a notification of reception of image data and requesting retransmission is transmitted from door-intercom master unit 100 in one slot in one frame. In the example of FIG. 12, image data is transmitted from camera 400 in five slots of slot 5, slot 6, slot 16, slot 17, and slot 18, and the response signal for providing a notification of reception of image data and requesting retransmission is transmitted from door-intercom master unit 100 in one slot, that is, slot 4. Moreover, door-intercom master unit 100 continuously transmits the first control signal and the second control signal during data communication. In the example of FIG. 12, the first control signal is transmitted in slot 14 and the second control signal is transmitted in slot 2.

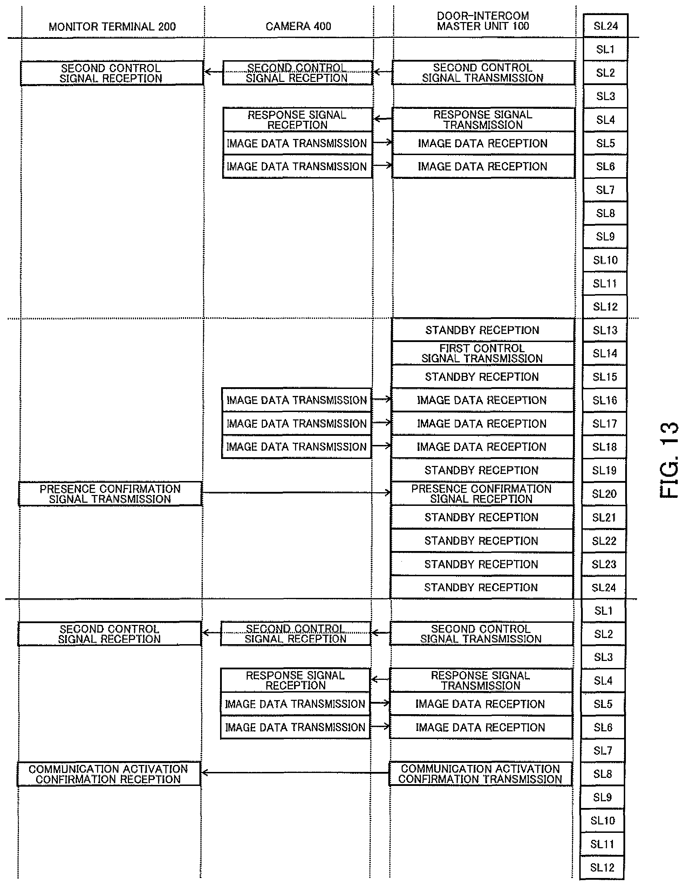

Referring to FIG. 13, a usage example of the slots in communication for presence confirmation during camera data communication according to Embodiment 1 of the present invention will be described below.

FIG. 13 illustrates a usage example of the slots in communication for presence confirmation during camera data communication according to Embodiment 1 of the present invention. As in the explanation of FIG. 12, data communication between door-intercom master unit 100 and camera 400 are activated into a state of data communication. Image data is transmitted from camera 400 in five slots of slot 5, slot 6, slot 16, slot 17, and slot 18, and door-intercom master unit 100 transmits the response signal for providing a notification of reception of image data and requesting retransmission in one slot, that is, slot 4. In this state, monitor terminal 200 transmits the presence confirmation signal in slot 20 and door-intercom master unit 100 transmits the signal for confirming communication activation in slot 8. Moreover, the door-intercom master unit continuously transmits the first control signal and the second control signal during communication of data and the presence confirmation signal. In the example of FIG. 13, the first control signal is transmitted in slot 14 and the second control signal is transmitted in slot 2.

The present invention has been described thus far according to the example of the preferred embodiment. At present, increasing numbers of ordinary households are provided with DECT door intercom systems and cordless phones and multiple in-home radio communication apparatuses according to the same system are installed in many environments.

In the radio communication system of the present invention in such environments, the subsidiary station and the control station perform time-division multiplex communication by using a sync word determined for each control station of the radio communication system. Thus, even when another control station operates in a receivable area of the subsidiary station, the probability of an overlap between a sync word used by the control station and a sync word used by another control station can be reduced. This can suppress the occurrence of retries in a search when the retries are caused by erroneous detection of a sync word, thereby suppressing an increase in power consumption. Furthermore, in the radio communication system of the present invention, the control station may transmit the control signal including a sync word in one slot in the basic frame of time-division multiplex communication, so that other slots can be freely used. Therefore, in a system accommodating multiple devices, for example, a door intercom system accommodating a camera, a sensor, and a terminal device having a monitoring function, influence on a radio resource usable for other communication is reduced, resulting in a small restriction and the effective usage of the radio resource even when multiple functions are simultaneously operated.

In the radio communication system of the present invention, the control signal with a sync word determined for each radio communication system is used to establish synchronization between the control station and the subsidiary station. Thus, even when other radio communication apparatuses operate according to the same system, the occurrence of erroneous synchronization can be suppressed in the establishment of synchronization.

In the radio communication system of the present invention, information necessary for communication between the control station and the subsidiary station is transmitted by the second control signal and the first control signal with a sync word determined for each system allows only a notification of information for receiving the second control signal. Thus, when the first control signal cannot be received, synchronization with the second control signal enables the acquisition of information necessary for communication by the second control signal, achieving communication between the control station and the subsidiary station. Therefore, even when the first control signal has radio frequency interference, the convenience is not reduced.

In the radio communication system of the present invention, information necessary for communication between the control station and the subsidiary station is transmitted by the second control signal and the first control signal with a sync word determined for each system allows only a notification of information for receiving the second control signal. Thus, in the radio communication system including multiple subsidiary stations, for example, a camera, a monitor terminal, and a sensor, the subsidiary stations can determine the inclusion of fast synchronization functions using the first control signal of the present invention according to whether the fast establishment of synchronization is required or not, thereby preventing the subsidiary stations from being excessively complicated.

In the radio communication system of the present invention, the first control signal and the second control signal are transmitted and received using two slots having the same positional relationship as the intra-frame positional relationship between two slots used for interactive communication between the control station and the subsidiary station in time-division multiplex communication. Thus, even when the number of transmitted control signals is increased by one, the number of simultaneous communication usable in the system does not decrease. This does not reduce the convenience of the radio communication system that includes multiple subsidiary stations such as a camera, a monitor terminal, and a sensor and needs to conduct simultaneous communication with the subsidiary stations, thereby improving synchronization and reducing the power consumption of the subsidiary stations.

The present invention has been described thus far according to the example of the preferred embodiment. The present invention is not limited to the example and can be optionally changed within the scope of the present invention such that a person skilled in the art could easily understand the present invention.

For example, in the present embodiment, the radio communication system is built into a home door intercom. The radio communication system of the present invention can be also integrated into a home automation network connected to a sensor and a camera.

For example, in the example of the present embodiment, the monitoring function of the radio communication system according to the present invention has been described. The present invention is also applicable to a radio communication system including a control station and a subsidiary station operating as a sensor. The present invention is applied to the system that establishes synchronization with the control station in response to a sensor reaction and provides a notification of the sensor reaction. This can reduce influence from other radio communication apparatuses in the establishment of synchronization, achieving fast synchronization.

For example, in the example of the present embodiment, one of eight different 16-bit selected sync words is selected based on the master-unit identification code. As the kinds of selected sync words increase, the probability of influence from the devices of the same system can be reduced. Moreover, the number of bits in the selected sync word can be increased so as to reduce the probability of influence from the devices of other systems.

For example, in the example of the present embodiment, the control station and the subsidiary station each select one of eight different 16-bit selected sync words based on the master-unit identification code. In the sequence of slave unit registration, the subsidiary station may be notified of a selected sync word that is determined by the control station.

### Industrial Applicability

The radio communication system according to the present invention is usable for an apparatus that performs a monitoring function for periodical communication using time-division multiplex communication.

### Reference Signs List

100 door-intercom master unit
200 monitor terminal
300 entrance slave unit
400 camera
500 smartphone

## Claims

1. A radio communication system, comprising a control station (100) and a subsidiary station (200) that perform time-division multiplex communication, wherein
the control station (100) comprises:
a first radio section (101) that is configured to perform radio communication with the subsidiary station (200) and to transmit a first control signal to the subsidiary station (200); and
a first control section (120) that is configured to determine a first sync word according to a predetermined method and to control the first radio section (101) to transmit the first control signal including the first sync word,
the subsidiary station (200) comprises:
a second radio section (201) that is configured to perform radio communication with the control station (100) and to receive the first control signal from the control station (100); and
a second control section (220) that is configured to detect the first sync word from the control signal, to establishe synchronization with the control station (100) based on the first sync word, and to control the second radio section (201) to perform time-division multiplex communication with the control station (100),
**characterized in that**
the first control section (120) is configured to control the first radio section (101) to transmit a second control signal including a fixed second sync word common to the control signal in the radio communication system, and
the second control section (220) is configured to establish, when the first sync word is not detected from the first control signal, synchronization with the control station (100) by using the second sync word included in the second control signal.

2. The radio communication system according to claim 1, wherein the first control section (120) is configured to select the first sync word such that the same bit string as the first sync word is excluded from bit strings other than a bit string transmitted as the first sync word from among bit strings of a signal periodically transmitted by the control station (100).

3. The radio communication system according to one of claims 1 and 2, wherein the first control section (120) is configured to transmit the determined first sync word in a second field of a plurality of fields that divide a slot of the first control signal and to transmit the information for receiving the second control signal in multiple fields including the last field.

4. The radio communication system according to any one of claims 1 to 3, wherein the first control section (120) is configured to determine the first sync word based on an identification code of the control station (100).

5. The radio communication system according to claim 4, wherein the second control signal further includes the identification code of the control station (100).

6. The radio communication system according to any one of claims 1 to 5, wherein the first control section (120) is configured to transmit the first control signal and the second control signal using a pair of control slots in a frame that is a basic unit of the time-division multiplex communication, the pair of control slots being remote from each other at a distance of a half of the frame.

7. The radio communication system according to any one of claims 1 to 6, wherein the subsidiary station (200) further comprises:
a first storage section (203) that is formed of a nonvolatile memory and is configured to store information necessary for communication with the control station (100);
a second storage section (204) that is formed of a volatile memory;
a battery (210) that is configured to supply power;
a timekeeping section (212) that is configured to keep a predetermined time;
a third storage section (213) that is formed of a volatile memory and is configured to store the first sync word determined by the control station (100) and information necessary for communication with the control station (100); and
a power supply control section (215) that is configured to start power supply to the first storage section (203), the second storage section (204), the second radio section (201), and the second control section (220) when the battery (210) is mounted or a timer of the timekeeping section (212) has expired, and to shut off power supply to the first storage section (203), the second storage section (204), the second radio section (201), and the second control section (220) in response to an instruction of the second control section (220),
the second control section (220) is configured to determine whether the battery (210) has been mounted or the timer of the timekeeping section (212) has expired, when power is supplied,
when determining that the battery (210) has been mounted, the second control section (220) is configured to read, from the first storage section (203), the information necessary for communication with the control station (100), to write the read information in the third storage section (213), to set a time until a notification of a presence confirmation signal in the timekeeping section (212), and to instruct the power supply control section (215) to shut off power supply, and
when determining that the timer of the timekeeping section (212) has expired, the second control section (220) is configured to establish synchronization with the control station (100) by using the information that is necessary for communication with the control station (100) and is stored in the third storage section (213) and the sync word determined by the control station (100), to provide a notification of the presence confirmation signal, to set a time until the notification of the presence confirmation signal in the timer section, and to instruct the power supply control section (215) to shut off the power supply.

## Patentansprüche

1. Funkkommunikationssystem mit einer Steuerstation (100) und einer untergeordneten Station (200), die eine Zeitmultiplexkommunikation durchführen, wobei
die Steuerstation (100) umfasst:
einen ersten Funkabschnitt (101), der ausgestaltet ist, mit der untergeordneten Station (200) Funkkommunikation durchzuführen und ein erstes Steuersignal an die untergeordnete Station (200) zu übermitteln, und
einen ersten Steuerabschnitt (120), der ausgestaltet ist, ein erstes Synchronisationswort gemäß einem vorbestimmten Verfahren zu bestimmen und die erste Funkstation (100) zu steuern, das erste Steuersignal mit dem ersten Synchronisationswort zu übermitteln,
die untergeordnete Station (200) umfasst:
einen zweiten Funkabschnitt (201), der ausgestaltet ist, Funkkommunikation mit der Steuerstation (100) durchzuführen und das erste Steuersignal von der Steuerstation (100) zu empfangen, und
einen zweiten Steuerabschnitt (220), der ausgestaltet ist, das erste Synchronisationswort aus dem Steuersignal zu erfassen, eine Synchronisation mit der Steuerstation (100) auf Basis des ersten Synchronisationswortes zu etablieren und die zweite Funkstation (201) zu steuern, Zeitmultiplexkommunikation mit der ersten Steuerstation (100) durchzuführen,
**gekennzeichnet dadurch, dass**
der erste Steuerabschnitt (120) ausgestaltet ist, den ersten Funkabschnitt (101) zu steuern, um ein zweites Steuersignal mit einem fixierten zweiten Synchronisationswort zu übermitteln, das dem Steuersignal in dem Funkkommunikationssystem gemein ist, und
der zweite Steuerabschnitt (220) ausgestaltet ist, wenn das erste Synchronisationswort aus dem ersten Steuersignal nicht erfasst wird, eine Synchronisation mit der Steuerstation (100) unter Verwendung des zweiten Synchronisationswortes zu etablieren, das in dem zweiten Steuersignal enthalten ist.

2. Funkkommunikationssystem nach Anspruch 1, wobei der erste Steuerabschnitt (120) ausgestaltet ist, das erste Synchronisationswort derart auszuwählen, dass der gleiche Bit-String wie das erste Synchronisationswort aus Bit-Strings ausgeschlossen ist, die unter den Bit-Strings eines Signals, das periodisch durch die Steuerstation (100) übermittelt wird, anders als ein Bit-String sind, der als das erste Synchronisationswort übermittelt wird.

3. Funkkommunikationssystem nach einem der Ansprüche 1 und 2, wobei die erste Steuerstation (120) ausgestaltet ist, das bestimmte erste Synchronisationswort in einem zweiten Feld mehrerer Felder zu übermitteln, die einen Slot des ersten Steuersignals unterteilen, und die Information zum Empfangen des zweiten Steuersignals in mehreren Feldern einschließlich des letzten Feldes zu übermitteln.

4. Funkkommunikationssystem nach einem der Ansprüche 1 bis 3, wobei der erste Steuerabschnitt (120) ausgestaltet ist, das erste Synchronisationswort auf Basis eines Identifikationscodes der Steuerstation (100) zu bestimmen.

5. Funkkommunikationssystem nach Anspruch 4, wobei das zweite Steuersignal ferner den Identifikationscode der Steuerstation (100) umfasst.

6. Funkkommunikationssystem nach einem der Ansprüche 1 bis 5, wobei der erste Steuerabschnitt (120) ausgestaltet ist, das erste Steuersignal und das zweite Steuersignal unter Verwendung eines Paares von Steuerslots in einem Frame zu übermitteln, der eine Grundeinheit der Zeitmultiplexkommunikation ist, wobei das Paar von Steuerslots voneinander mit einer Entfernung von einer Hälfte des Frames beabstandet ist.

7. Funkkommunikationssystem nach einem der Ansprüche 1 bis 6, wobei die untergeordnete Station (200) ferner umfasst:
einen ersten Speicherabschnitt (203), der von einem nicht flüchtigen Speicher gebildet wird und ausgestaltet ist, Information zu speichern, die für eine Kommunikation mit der Steuerstation (100) nötig ist,
einen zweiten Speicherabschnitt (204), der aus einem flüchtigen Speicher gebildet ist,
eine Batterie (210), die ausgestaltet ist, Leistung bereitzustellen,
einem Zeitnachverfolgerabschnitt (212), der ausgestaltet ist, eine vorbestimmte Zeit nachzuverfolgen,
einen dritten Speicherabschnitt (213), der aus einem flüchtigen Speicher gebildet ist und ausgestaltet ist, das erste Synchronisationswort, das von der Steuerstation (100) bestimmte wurde, und Information zu speichern, die für eine Kommunikation mit der Steuerstation (100) nötig ist, und
einen Leistungszufuhrsteuerabschnitt (215), der ausgestaltet ist, eine Leistungsbereitstellung für den ersten Speicherabschnitt (203), den zweiten Speicherabschnitt (204), den zweiten Funkabschnitt (201) und den zweiten Steuerabschnitt (220) zu starten, wenn die Batterie (210) eingesetzt wird oder ein Zeitnehmer des Zeitnachverfolgerabschnitts (212) abgelaufen ist, und die Leistungsbereitstellung für den ersten Speicherabschnitt (203), den zweiten Speicherabschnitt (204), den zweiten Funkabschnitt (201) und den zweiten Steuerabschnitt (220) in Antwort auf eine Instruktion des zweiten Steuerabschnitts (220) abzuschalten,
der zweite Steuerabschnitt (220) ausgestaltet ist, zu bestimmen, ob die Batterie (210) eingesetzt wurde oder der Zeitnehmer des Zeitnachverfolgerabschnitts (212) abgelaufen ist, wenn Leistung bereitgestellt wird,
wenn bestimmt wird, dass die Batterie (210) eingesetzt wurde, der zweite Steuerabschnitt (220) ausgestaltet ist, aus dem ersten Speicherabschnitt (203) die Information auszulesen, die für eine Kommunikation mit der Steuerstation (100) notwendig ist, die ausgelesene Information in den dritten Speicherabschnitt (213) zu schreiben und eine Zeit bis zu einer Benachrichtigung eines Präsenzbestätigungssignals in dem Zeitnachverfolgerabschnitt (212) einzustellen und den Leistungszufuhrsteuerabschnitt (215) zu instruieren, die Leistungsbereitstellung auszuschalten, und
wenn bestimmt wird, dass der Zeitnehmer des Zeitnachverfolgerabschnitts (212) abgelaufen ist, der zweite Steuerabschnitt (220) ausgestaltet ist, eine Synchronisation mit der Steuerstation (100) unter Verwendung der Information, die für die Kommunikation mit der Steuerstation (100) notwendig ist und die in dem dritten Speicherabschnitt (213) gespeichert ist, und des Synchronisationswortes zu etablieren, das durch die Steuerstation (100) bestimmt wurde, eine Benachrichtigung des Präsenzbestätigungssignals vorzusehen, eine Zeit bis zu der Benachrichtigung des Präsenzbestätigungssignals in dem Zeitnehmerabschnitt einzustellen und den Leistungszufuhrsteuerabschnitt (215) zu instruieren, die Leistungsbereitstellung auszuschalten.

## Revendications

1. Système de radiocommunication comprenant une station de commande (100) et une station subsidiaire (200, 400) qui effectuent de la communication de multiplexage par répartition dans le temps, dans lequel
la station de commande (100) comprend:
une première section radio (101) qui est configurée pour effectuer de la radiocommunication avec la station subsidiaire (200) et pour transmettre un premier signal de commande à la station subsidiaire (200), et
une première section de commande (120) qui est configurée pour déterminer un premier mot de synchronisation selon un procédé prédéterminé et pour commander la première section radio (101) pour transmettre le premier signal de commande comprenant le premier mot de synchronisation,
la station subsidiaire (200) comprend:
une deuxième section radio (201) qui est configurée pour effectuer de la radiocommunication avec la station de commande (100) et pour recevoir le premier signal de commande de la station de commande (100), et
une deuxième section de commande (220) qui est configurée pour détecter le premier mot de synchronisation à partir du signal de commande, pour établir une synchronisation avec la station de commande (100) sur la base du premier mot de synchronisation, et pour commander la deuxième section radio (201) pour effectuer de la communication de multiplexage par répartition dans le temps avec la station de commande (100),
**caractérisé par le fait que**
la première section de commande (120) est configurée pour commander la première section radio (101) pour transmettre un deuxième signal de commande comprenant un deuxième mot de synchronisation fixé commun au signal de commande dans le système de radiocommunication, et
la deuxième section de commande (220) est configurée pour établir, lorsque le premier mot de synchronisation n'est pas détecté à partir du premier signal de commande, une synchronisation avec la station de commande (100) en utilisant le deuxième mot de synchronisation inclus dans le deuxième signal de commande.

2. Système de radiocommunication selon la revendication 1, dans lequel la première section de commande (120) est configurée pour sélectionner le premier mot de synchronisation de telle sorte que la même chaîne de bits que le premier mot de synchronisation soit exclue de chaînes de bits autres qu'une chaîne de bits transmise en tant que premier mot de synchronisation, parmi des chaînes de bits d'un signal qui est transmis périodiquement par la station de commande (100).

3. Système de radiocommunication selon l'une quelconque des revendications 1 et 2, dans lequel la première section de commande (120) est configurée pour transmettre le premier mot de synchronisation déterminé dans un deuxième champ d'une pluralité de champs qui divisent un créneau du premier signal de commande, et pour transmettre l'information afin de recevoir le deuxième signal de commande dans de multiples champs, y compris le dernier champ.

4. Système de radiocommunication selon l'une quelconque des revendications 1 à 3, dans lequel la première section de commande (120) est configurée pour déterminer le premier mot de synchronisation sur la base d'un code d'identification de la station de commande (100).

5. Système de radiocommunication selon la revendication 4, dans lequel le deuxième signal de commande comprend en outre le code d'identification de la station de commande (100).

6. Système de radiocommunication selon l'une quelconque des revendications 1 à 5, dans lequel la première section de commande (120) est configurée pour transmettre le premier signal de commande et le deuxième signal de commande en utilisant une paire de créneaux de commande dans une trame qui est une unité de base de la communication de multiplexage par répartition dans le temps, la paire de créneaux de commande étant distante l'une de l'autre d'une distance d'une moitié de la trame.

7. Système de radiocommunication selon l'une quelconque des revendications 1 à 6, dans lequel la station subsidiaire (200) comprend en outre:
une première section de stockage (203) qui est formée d'une mémoire non volatile et est configurée pour stocker de l'information qui est nécessaire à une communication avec la station de commande (100),
une deuxième section de stockage (204) qui est formée d'une mémoire volatile,
une batterie (210) qui est configurée pour fournir de la puissance,
une section à garder du temps (212) qui est configurée pour garder un temps prédéterminé,
une troisième section de stockage (213) qui est formée d'une mémoire volatile et est configurée pour stocker le premier mot de synchronisation qui est déterminé par la station de commande (100) et de l'information qui est nécessaire à une communication avec la station de commande (100), et
une section de commande d'alimentation en puissance (215) qui est configurée pour démarrer une alimentation en puissance de la première section de stockage (203), de la deuxième section de stockage (204), de la deuxième section radio (201) et de la deuxième section de commande (220) lorsque la batterie (210) est montée ou une minuterie de la section à garder du temps (212) s'est écoulée, et pour couper l'alimentation en puissance de la première section de stockage (203), de la deuxième section de stockage (204), de la deuxième section radio (201) et de la deuxième section de commande (220) en réponse à une instruction de la deuxième section de commande (220),
la deuxième section de commande (220) est configurée pour déterminer si la batterie (210) a été montée ou si la minuterie de la section à garder du temps (212) s'est écoulée, lorsque de la puissance est fournie,
lorsqu'il est déterminé que la batterie (210) a été montée, la deuxième section de commande (220) est configurée pour lire, dans la première section de stockage (203), l'information nécessaire à une communication avec la station de commande (100), pour écrire l'information lue dans la troisième section de stockage (213), pour régler un temps jusqu'à une notification d'un signale de confirmation de présence dans la section à garder du temps (212), et pour instruire la section de commande d'alimentation en puissance (225) de couper l'alimentation en puissance, et
lorsqu'il est déterminé que la minuterie de la section à garder du temps (212) a expiré, la deuxième section de commande (220) est configurée pour établir une synchronisation avec la station de commande (100) en utilisant l'information qui est nécessaire à la communication avec la station de commande (100) et est stockée dans la troisième section de stockage (213) ainsi que le mot de synchronisation déterminé par la station de commande (100), pour fournir une notification du signal de confirmation de présence, pour régler un temps jusqu'à la notification du signal de confirmation de présence dans la section de minuterie, et pour instruire la section de commande d'alimentation en puissance (215) de couper l'alimentation en puissance.
